# EUROPEAN PATENT APPLICATION

(11) **EP 4 417 411 A1**
(43) Date of publication of application: **21.08.2024**
(21) Application number: 22880747.5
(22) Date of filing: 22.09.2022
(51) Int. Cl.: B32B 5/18, B32B 27/00, B01D 53/04, C01B 32/50, B01J 20/26, B01J 20/28, B01J 20/30, B01J 20/34

(54) **ACIDIC GAS ADSORBENT AND ACIDIC GAS ADSORPTION DEVICE**

(30) Priority: 15.10.2021 JP 2021169443; 01.12.2021 JP 2021195086
(71) Applicant: NITTO DENKO CORPORATION, Ibaraki-shi Osaka 567-8680 (JP)
(72) Inventor: ITO Katsunori, Ibaraki-shi, Osaka 567-8680 (JP); UEDA Saki, Ibaraki-shi, Osaka 567-8680 (JP); YAMAMOTO Mizuki, Ibaraki-shi, Osaka 567-8680 (JP)
(74) Representative: Hoffmann Eitle
(86) International application number: PCT/JP2022/035487
(87) International publication number: WO 2023/063051

(57) **Abstract**

The present invention provides an acidic gas adsorbent suitable for adsorption and desorption of acidic gas under a relatively mild condition. The acidic gas adsorbent of the present invention includes a polymer P having an amino group. A density of nitrogen element in the acidic gas adsorbent is higher than 12.0 mmol/g. With respect to the acidic gas adsorbent, when an adsorption test A1 is performed, an adsorption amount a1 of carbon dioxide is 0.35 mmol/g or more. When a desorption test B1 is performed, a desorption amount b1 of carbon dioxide is 0.2 mmol/g or more.

## Description

### TECHNICAL FIELD

The present invention relates to an acidic gas adsorbent and an acidic gas adsorption device.

### BACKGROUND ART

In recent years, in order to reduce the amount of carbon dioxide in atmospheric air, carbon capture and storage (CCS) and carbon capture and utilization (CCU) have been considered. In CCS and CCU, in some cases, capture of carbon dioxide is performed by separating carbon dioxide from atmospheric air.

As a method for separating acidic gas such as carbon dioxide from atmospheric air, an adsorption method in which acidic gas is caused to be adsorbed by an adsorbent to be separated has been developed. The adsorbent utilized in the adsorption method can adsorb acidic gas by coming into contact with atmospheric air, for example.

The material of the adsorbent is, for example, an amine compound having a function of adsorbing acidic gas. As an example, Patent Literature 1 discloses fibrillated cellulose in which an amino group is introduced, as an adsorbent. Patent Literature 2 discloses an adsorbent in which amino groups are introduced inside the pores of a mesoporous material.

### CITATION LIST

### Patent Literature

| | |
|---|---|
| Patent Literature 1: | WO 2017/009241 |
| Patent Literature 2: | US Patent No. 7767004 |

### SUMMARY OF INVENTION

### Technical Problem

An acidic gas adsorbent suitable for adsorption and desorption of acidic gas under a relatively mild condition is required.

### Solution to Problem

The present invention provides an acidic gas adsorbent including a polymer having an amino group, wherein
a density of nitrogen element in the acidic gas adsorbent is higher than 12.0 mmol/g,
when the following adsorption test A1 is performed, an adsorption amount a1 of carbon dioxide is 0.35 mmol/g or more, and
when the following desorption test B1 is performed, a desorption amount b1 of carbon dioxide is 0.2 mmol/g or more,
adsorption test A1: mixed gas composed of carbon dioxide, nitrogen, and water vapor is continuously fed into a container containing the acidic gas adsorbent for 15 hours, wherein a concentration of the carbon dioxide in the mixed gas is 400 vol ppm, and the mixed gas has a temperature of 23°C and a humidity of 50%RH, and
desorption test B1: the acidic gas adsorbent after the adsorption test A1 is performed is heated at 50°C for 1.5 hours while the mixed gas is continuously fed into the container.

Further, the present invention provides an acidic gas adsorbent including a polymer having an amino group, wherein
a density of nitrogen element in the acidic gas adsorbent is higher than 12.0 mmol/g,
the acidic gas adsorbent has a specific surface area of 0.5 m²/g or more, and
the polymer has a glass transition temperature of 40°C or less.

Further, the present invention provides an acidic gas adsorption device including an adsorption part having a gas inlet and a gas outlet, wherein the adsorption part contains the above acidic gas adsorbent.

### Advantageous Effects of Invention

According to the present invention, an acidic gas adsorbent suitable for adsorption and desorption of acidic gas under a relatively mild condition can be provided.

### BRIEF DESCRIPTION OF THE DRAWINGS

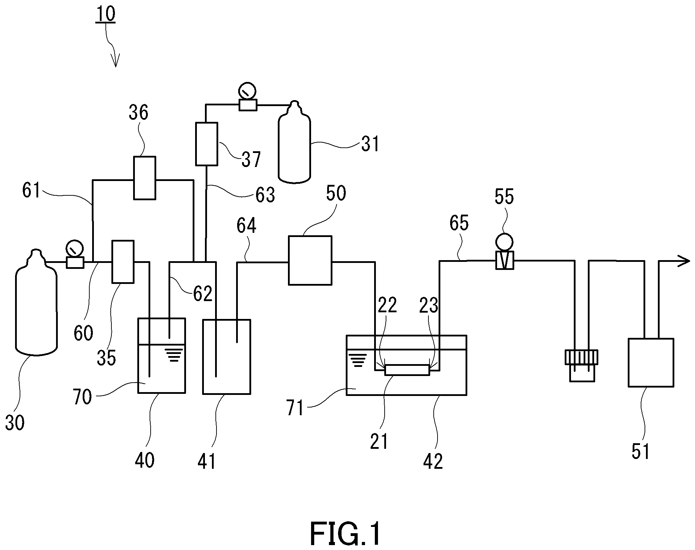

FIG. 1 is a diagram for describing a method for measuring an adsorption amount of carbon dioxide by an acidic gas adsorbent.

### DESCRIPTION OF EMBODIMENTS

An acidic gas adsorbent according to a first aspect of the present invention is an acidic gas adsorbent including a polymer having an amino group, wherein
a density of nitrogen element in the acidic gas adsorbent is higher than 12.0 mmol/g,
when the following adsorption test A1 is performed, an adsorption amount a1 of carbon dioxide is 0.35 mmol/g or more, and
when the following desorption test B1 is performed, a desorption amount b1 of carbon dioxide is 0.2 mmol/g or more,
adsorption test A1: mixed gas composed of carbon dioxide, nitrogen, and water vapor is continuously fed into a container containing the acidic gas adsorbent for 15 hours, wherein a concentration of the carbon dioxide in the mixed gas is 400 vol ppm, and the mixed gas has a temperature of 23°C and a humidity of 50%RH, and
desorption test B1: the acidic gas adsorbent after the adsorption test A1 is performed is heated at 50°C for 1.5 hours while the mixed gas is continuously fed into the container.

In a second aspect of the present invention, for example, in the acidic gas adsorbent according to the first aspect, a rate of the desorption amount b1 (mmol/g) relative to the adsorption amount a1 (mmol/g) is 50% or more.

In a third aspect of the present invention, for example, in the acidic gas adsorbent according to the first or second aspect, when the following desorption test B2 is performed, a desorption amount b2 of carbon dioxide is 0.25 mmol/g or more,
desorption test B2: the acidic gas adsorbent after the adsorption test A1 is performed is heated at 65°C for 1.5 hours while the mixed gas is continuously fed into the container.

In a fourth aspect of the present invention, for example, in the acidic gas adsorbent according to the third aspect, a rate of the desorption amount b2 (mmol/g) relative to the adsorption amount a1 (mmol/g) is 70% or more.

In a fifth aspect of the present invention, for example, in the acidic gas adsorbent according to any one of the first to fourth aspects, when the following adsorption test A2 is performed, an adsorption amount a2 of carbon dioxide is 0.05 mmol/g or more,
adsorption test A2: the mixed gas is continuously fed into the container for 1 hour.

In a sixth aspect of the present invention, for example, in the acidic gas adsorbent according to any one of the first to fifth aspects, when the following adsorption test A3 is performed, an adsorption amount a3 of carbon dioxide is 0.1 mmol/g or more,
adsorption test A3: the mixed gas is continuously fed into the container for 4 hours.

In a seventh aspect of the present invention, for example, in the acidic gas adsorbent according to any one of the first to sixth aspects, the polymer has a glass transition temperature of 40°C or less.

In an eighth aspect of the present invention, for example, the acidic gas adsorbent according to any one of the first to seventh aspects has a specific surface area of 0.5 m²/g or more.

An acidic gas adsorbent according to a ninth aspect of the present invention is an acidic gas adsorbent including a polymer having an amino group, wherein
a density of nitrogen element in the acidic gas adsorbent is higher than 12.0 mmol/g,
the acidic gas adsorbent has a specific surface area of 0.5 m²/g or more, and
the polymer has a glass transition temperature of 40°C or less.

In a tenth aspect of the present invention, for example, with respect to the acidic gas adsorbent according to any one of the first to ninth aspects, when heat treatment is performed in an environment of 85°C and 10%RH for 100 hours, a maintenance rate R1 of an amount (mmol/g) of carbon dioxide that can be adsorbed is 50% or more.

In an eleventh aspect of the present invention, for example, with respect to the acidic gas adsorbent according to any one of the first to tenth aspects, when heat treatment is performed in an environment of 85°C and 85%RH for 100 hours, a maintenance rate R2 of an amount (mmol/g) of carbon dioxide that can be adsorbed is 50% or more.

In a twelfth aspect of the present invention, for example, in the acidic gas adsorbent according to any one of the first to eleventh aspects, the polymer is included as a main component.

In a thirteenth aspect of the present invention, for example, in the acidic gas adsorbent according to any one of the first to twelfth aspects, the polymer is an amine polymer including a constitutional unit derived from an epoxy monomer.

In a fourteenth aspect of the present invention, for example, in the acidic gas adsorbent according to the thirteenth aspect, the amine polymer includes at least one selected from the group consisting of a polymer P1 of a monomer group including an amine monomer and an epoxy monomer and a reaction product P2 of a compound group including an amine prepolymer and an epoxy monomer.

In a fifteenth aspect of the present invention, for example, in the acidic gas adsorbent according to the fourteenth aspect, the amine prepolymer has a weight average molecular weight of 300 or more.

In a sixteenth aspect of the present invention, for example, in the acidic gas adsorbent according to the fourteenth or fifteenth aspect, the amine prepolymer includes polyethyleneimine.

In a seventeenth aspect of the present invention, for example, in the acidic gas adsorbent according to the fourteenth aspect, the amine monomer includes an aliphatic amine.

In an eighteenth aspect of the present invention, for example, in the acidic gas adsorbent according to any one of the thirteenth to seventeenth aspects, the epoxy monomer has an epoxy equivalent of 150 g/eq. or less.

In a nineteenth aspect of the present invention, for example, in the acidic gas adsorbent according to any one of the thirteenth to eighteenth aspects, the epoxy monomer includes a polyfunctional epoxy compound having an ether group.

In a twentieth aspect of the present invention, for example, the acidic gas adsorbent according to any one of the first to nineteenth aspects has a porous structure.

An acidic gas adsorption device according to a twenty-first aspect of the present invention includes
an adsorption part having a gas inlet and a gas outlet, wherein
the adsorption part contains the acidic gas adsorbent according to any one of the first to twentieth aspects.

Hereinafter, details of the present invention will be described, but the following description is not intended to limit the present invention to specific embodiments.

An acidic gas adsorbent of the present embodiment includes a polymer P having an amino group. A density d of nitrogen element in the acidic gas adsorbent is higher than 12.0 mmol/g.

The density d of nitrogen element in the acidic gas adsorbent is preferably 12.2 mmol/g or more, and may be 12.5 mmol/g or more, 13.0 mmol/g or more, 13.5 mmol/g or more, 14.0 mmol/g or more, 14.5 mmol/g or more, 15.0 mmol/g or more, 15.5 mmol/g or more, 16.0 mmol/g or more, 16.5 mmol/g or more, 17.0 mmol/g or more, or even 17.5 mmol/g or more. The higher the density d of nitrogen element is, the larger and the higher the adsorption amount of acidic gas by the acidic gas adsorbent and the speed at which acidic gas is adsorbed by the acidic gas adsorbent tend to be. The upper limit value of the density d of nitrogen element is not limited in particular, is, for example, 30 mmol/g, and may be 20 mmol/g. In the present description, the density d of nitrogen element in the acidic gas adsorbent means the amount of substance of nitrogen element included in 1 g of the acidic gas adsorbent. When all nitrogen element included in the acidic gas adsorbent is derived from the amino group, the density d of nitrogen element can be regarded as the density of the amino group in the acidic gas adsorbent.

The density d of nitrogen element can be measured according to the following method. First, a weight ratio w (wt%) of nitrogen element included in the acidic gas adsorbent is measured by using a commercially-available CHN elemental analyzer. On the basis of the obtained result, the density d of nitrogen element can be calculated from the following formula. Density d (mmol/g) = (weight ratio w (wt%) × 1000)/(atomic weight of nitrogen × 100)

Furthermore, with respect to the acidic gas adsorbent of the present embodiment, when the following adsorption test A1 is performed, an adsorption amount a1 of carbon dioxide is 0.35 mmol/g or more. Furthermore, when the following desorption test B1 is performed, a desorption amount b1 of carbon dioxide is 0.2 mmol/g or more.

Adsorption testA1: Mixed gas G composed of carbon dioxide, nitrogen, and water vapor is continuously fed into a container containing the acidic gas adsorbent for 15 hours. Here, the concentration of the carbon dioxide in the mixed gas G is 400 vol ppm, and the mixed gas G has a temperature of 23°C and a humidity of 50%RH.

Desorption test B1: The acidic gas adsorbent after the adsorption test A1 is performed is heated at 50°C for 1.5 hours while the mixed gas G is continuously fed into the above container.

### (Adsorption test and desorption test)

In the following, the details of the adsorption test A1 and the desorption test B1 will be described. The adsorption test A1 and the desorption test B1 can be performed by using a measurement device 10 shown in FIG. 1, for example. The measurement device 10 includes a first tank 30 and a second tank 31. As an example, the first tank 30 stores dry-state nitrogen, and the second tank 31 stores mixed gas of dry-state nitrogen and dry-state carbon dioxide. The concentration of carbon dioxide in the mixed gas in the second tank 31 is 5 vol%, for example.

The measurement device 10 further includes a first container 40 containing water 70, and a first path 60 for sending nitrogen from the first tank 30 to the first container 40. The first path 60 has one end connected to a gas outlet of the first tank 30, and the other end disposed in the water 70 in the first container 40. Nitrogen sent from the first tank 30 to the first container 40 is humidified by coming into contact with the water 70. On the first path 60, a massflow controller 35 for adjusting the flow rate of nitrogen that is sent from the first tank 30 to the first container 40 is disposed.

The measurement device 10 further includes a second container 41, a second path 62, and a bypass path 61. The second path 62 connects the first container 40 and the second container 41 to each other. Nitrogen sent to the first container 40 and humidified is sent through the second path 62 to the second container 41. The bypass path 61 is branched from the first path 60 at a position between the first tank 30 and the massflow controller 35 and is connected to the second path 62. A part of the nitrogen sent from the first tank 30 flows into the bypass path 61 and is sent through the second path 62 to the second container 41. On the bypass path 61, a massflow controller 36 for adjusting the flow rate of nitrogen that is sent from the first tank 30 to the bypass path 61 is disposed.

The measurement device 10 further includes a third path 63 for sending the mixed gas from the second tank 31 to the second path 62. The third path 63 has one end connected to a gas outlet of the second tank 31 and the other end connected to the second path 62. On the third path 63, a massflow controller 37 for adjusting the flow rate of the mixed gas that is sent from the second tank 31 to the second path 62 is disposed. The mixed gas sent to the second path 62 is sent through the second path 62 to the second container 41.

The measurement device 10 further includes a third container 42 and a fourth path 64. The third container 42 contains water 71 and an adsorption part 21 disposed in the water 71. In the third container 42, the temperature of the water 71 is maintained at 23°C. The adsorption part 21 has a gas inlet 22 and a gas outlet 23. The adsorption part 21 serves as a container containing the acidic gas adsorbent. The adsorption part 21 is configured such that the water 71 does not permeate therein. Typically, the adsorption part 21 is a tube composed of a hydrophobic resin, e.g., a fluorine resin such as tetrafluoroethylene-perfluoroalkoxyethylene copolymer (PFA). As an example, the tube as the adsorption part 21 has an inner diameter of 4 mm and an outer diameter of 6 mm. The adsorption part 21 is configured to be attachable to/detachable from the measurement device 10.

The measurement device 10 can also be used as an acidic gas adsorption device including the adsorption part 21. The present invention provides, in another aspect thereof, an acidic gas adsorption device 20 including the adsorption part 21 having the gas inlet 22 and the gas outlet 23, wherein the adsorption part 21 contains the acidic gas adsorbent.

The fourth path 64 connects the second container 41 and the third container 42 to each other. Specifically, the fourth path 64 is connected to the gas inlet 22 of the adsorption part 21 in the third container 42. In the fourth path 64, a first concentration meter 50 for measuring the concentration of carbon dioxide in the gas that is supplied to the adsorption part 21 is disposed. As the first concentration meter 50, for example, a CO₂/H₂O gas analyzer, LI-850-3, manufactured by LI-COR, Inc., can be used.

The measurement device 10 further includes a fifth path 65 connected to the gas outlet 23 of the adsorption part 21 and for discharging gas from the adsorption part 21 to the outside of the measurement device 10. On the fifth path 65, a back pressure valve 55 and a second concentration meter 51 are disposed. The back pressure valve 55 allows the pressure in the adsorption part 21 to be adjusted to a constant value. The second concentration meter 51 can measure the concentration of carbon dioxide in the gas that is discharged from the adsorption part 21. As the second concentration meter 51, for example, a CO₂/H₂O gas analyzer, LI-850-3, manufactured by LI-COR, Inc., can be used.

Each path of the measurement device 10 is composed of a metal-made or resin-made pipe, for example.

### [Pretreatment]

First, an acidic gas adsorbent is prepared, and a drying process is performed thereon. The acidic gas adsorbent that has not been subjected to heat resistance and moisture heat resistance tests described later is used. The drying process is performed by processing the acidic gas adsorbent for two hours or more under a condition of 60°C, in a vacuum atmosphere, for example. Next, in a dry room having a dew point of about - 60°C, the adsorption part 21 is filled with the acidic gas adsorbent having been subjected to the drying process. The weight of the acidic gas adsorbent with which the adsorption part 21 is filled is 50 mg, for example. Next, the fourth path 64 and the fifth path 65 are connected to both ends of the adsorption part 21, and the adsorption part 21 is immersed in the water 71 in the third container 42.

Next, nitrogen from the first tank 30 and the mixed gas from the second tank 31 are supplied to the second container 41 through the first path 60, the second path 62, the bypass path 61, and the third path 63 of the measurement device 10. In the second container 41, these gases are mixed, and the mixed gas G composed of carbon dioxide, nitrogen, and water vapor is obtained. In the second container 41, the concentration of carbon dioxide in the mixed gas G is adjusted to 400 vol ppm. The mixed gas G has a temperature of 23°C and a humidity of 50%RH. The mixed gas G is supplied to the adsorption part 21 through the fourth path 64, at a sufficient flow rate with respect to the weight of the acidic gas adsorbent, e.g., at a flow rate of 300 mL/min with respect to 50 mg of the acidic gas adsorbent. In the adsorption part 21, the pressure of the mixed gas G is adjusted by the back pressure valve 55, for example, to 107 kPa.

Next, in a state where the mixed gas G is supplied to the adsorption part 21, the adsorption part 21 is taken out of the third container 42, and the adsorption part 21 is immersed in a hot water bath (not shown) at 80°C for two hours or more. Immersion of the adsorption part 21 in the hot water bath is performed until the concentration of carbon dioxide measured by the first concentration meter 50 and the concentration of carbon dioxide measured by the second concentration meter 51 have substantially the same value. Accordingly, with respect to the acidic gas adsorbent in the adsorption part 21, the pretreatment is completed.

### [Adsorption test]

Next, in a state where the mixed gas G is supplied to the adsorption part 21, the adsorption part 21 is taken out of the hot water bath and is immersed in the water 71 in the third container 42. Accordingly, an adsorption test (adsorption test A1) for carbon dioxide is started with respect to the acidic gas adsorbent in the adsorption part 21. The adsorption test is performed until 15 hours elapses from the start. Specifically, the mixed gas G is continuously fed to the adsorption part 21 for 15 hours. When the adsorption test is performed for 15 hours, adsorption of carbon dioxide by the acidic gas adsorbent can, normally, be regarded as having reached equilibrium.

In the adsorption test A1, an amount of substance M1 of carbon dioxide adsorbed by the acidic gas adsorbent until 15 hours from the start is measured. The amount of substance of carbon dioxide adsorbed by the acidic gas adsorbent can be calculated from a result of measuring, over time, the difference between the concentration of carbon dioxide measured by the first concentration meter 50 and the concentration of carbon dioxide measured by the second concentration meter 51. On the basis of the amount of substance M1, the amount of substance of carbon dioxide adsorbed by 1 g of the acidic gas adsorbent in 15 hours is calculated, and the obtained calculated value is identified as the adsorption amount a1.

### [Desorption test]

Next, in a state where the mixed gas G is continuously fed to the adsorption part 21, the adsorption part 21 is taken out from the third container 42 and immersed in a hot water bath (not shown) at 50°C. Accordingly, a desorption test (desorption test B1) for carbon dioxide is started with respect to the acidic gas adsorbent in the adsorption part 21. The desorption test is performed until 1.5 hours elapses from the start.

In the desorption test B1, an amount of substance M2 of carbon dioxide desorbed from the acidic gas adsorbent until 1.5 hours from the start is measured. The amount of substance of carbon dioxide desorbed from the acidic gas adsorbent can be calculated from a result of measuring, over time, the difference between the concentration of carbon dioxide measured by the first concentration meter 50 and the concentration of carbon dioxide measured by the second concentration meter 51. On the basis of the amount of substance M2, the amount of substance of carbon dioxide desorbed from 1 g of the acidic gas adsorbent in 1.5 hours is calculated, and the obtained calculated value is identified as the desorption amount b1.

### [Adsorption amount and desorption amount]

With respect to the acidic gas adsorbent of the present embodiment, the adsorption amount a1 of carbon dioxide when the adsorption test A1 is performed is preferably 0.4 mmol/g or more, and may be 0.5 mmol/g or more, 0.8 mmol/g or more, 1.0 mmol/g or more, 1.3 mmol/g or more, 1.5 mmol/g or more, 1.8 mmol/g or more, 2.0 mmol/g or more, 2.1 mmol/g or more, 2.2 mmol/g or more, or even 2.3 mmol/g or more. The upper limit value of the adsorption amount a1 of carbon dioxide is not limited in particular, and is 10 mmol/g, for example.

With respect to the acidic gas adsorbent of the present embodiment, the desorption amount b1 of carbon dioxide when the desorption test B1 is performed is preferably 0.25 mmol/g or more, and may be 0.3 mmol/g or more, 0.5 mmol/g or more, 0.8 mmol/g or more, 1.0 mmol/g or more, 1.3 mmol/g or more, 1.5 mmol/g or more, or even 1.8 mmol/g or more. The upper limit value of the desorption amount b1 of carbon dioxide is not limited in particular, and is 10 mmol/g, for example.

The rate (50°C desorption rate) of the desorption amount b1 (mmol/g) relative to the adsorption amount a1 (mmol/g) is, for example, 40% or more, and may be 45% or more, 50% or more, 60% or more, 70% or more, 80% or more, or even 90% or more. The upper limit value of the 50°C desorption rate is not limited in particular, and is 99%, for example.

The present invention provides, in another aspect thereof, an acidic gas adsorbent including a polymer P having an amino group, wherein
a density of nitrogen element in the acidic gas adsorbent is higher than 12.0 mmol/g,
when the above adsorption test A1 is performed, an adsorption amount a1 of carbon dioxide is 0.35 mmol/g or more, and
the rate (50°C desorption rate) of a desorption amount b1 (mmol/g) of carbon dioxide when the above desorption test B1 is performed, relative to the adsorption amount a1 (mmol/g), is 40% or more.
In the acidic gas adsorbent, the 50°C desorption rate may satisfy the range exemplified above, and in particular may be 50% or more.

With respect to the acidic gas adsorbent of the present embodiment, when the following desorption test B2 is performed, a desorption amount b2 of carbon dioxide is preferably 0.25 mmol/g or more.

Desorption test B2: The acidic gas adsorbent after the above adsorption test A1 is performed is heated at 65°C for 1.5 hours while the mixed gas G is continuously fed into a container (the above-described adsorption part 21) containing the acidic gas adsorbent.

The desorption test B2 can be performed by the same method as the above-described desorption test B1, except that the adsorption part 21 is immersed in a hot water bath at 65°C. The desorption amount b2 of carbon dioxide when the desorption test B2 is performed is preferably 0.3 mmol/g or more, and may be 0.5 mmol/g or more, 0.8 mmol/g or more, 1.0 mmol/g or more, 1.3 mmol/g or more, 1.5 mmol/g or more, 1.8 mmol/g or more, 2.0 mmol/g or more, 2.1 mmol/g or more, or even 2.2 mmol/g or more. The upper limit value of the desorption amount b2 of carbon dioxide is not limited in particular, and is 10 mmol/g, for example.

The rate (65°C desorption rate) of the desorption amount b2 (mmol/g) relative to the adsorption amount a1 (mmol/g) is, for example, 40% or more, and may be 45% or more, 50% or more, 60% or more, 70% or more, 80% or more, 90% or more, 95% or more, 96% or more, or even 97% or more, or may be 100%.

With respect to the acidic gas adsorbent of the present embodiment, when the following adsorption test A2 is performed, an adsorption amount a2 of carbon dioxide is preferably 0.05 mmol/g or more. The adsorption amount a2 can be used as an indicator of the speed at which acidic gas is adsorbed. That is, it can be said that the larger the adsorption amount a2 is, the higher the speed at which the acidic gas adsorbent adsorbs acidic gas is.

Adsorption test A2: The mixed gas G is continuously fed into a container (the above-described adsorption part 21) containing the acidic gas adsorbent for 1 hour.

The adsorption test A2 can be performed by the same method as the above-described adsorption test A1, except that the test time is changed from 15 hours to 1 hour. The adsorption amount a2 of carbon dioxide when the adsorption test A2 is performed is preferably 0.1 mmol/g or more, and may be 0.2 mmol/g or more, 0.3 mmol/g or more, 0.4 mmol/g or more, 0.5 mmol/g or more, 0.6 mmol/g or more, 0.7 mmol/g or more, 0.8 mmol/g or more, or even 0.9 mmol/g or more. The upper limit value of the adsorption amount a2 of carbon dioxide is not limited in particular, and is 5 mmol/g, for example.

With respect to the acidic gas adsorbent of the present embodiment, when the following adsorption test A3 is performed, an adsorption amount a3 of carbon dioxide is preferably 0.1 mmol/g or more. The adsorption amount a3 can also be used as an indicator of the speed at which acidic gas is adsorbed. That is, it can be said that the larger the adsorption amount a3 is, the higher the speed at which the acidic gas adsorbent adsorbs acidic gas is.

Adsorption test A3: The mixed gas G is continuously fed into a container (the above-described adsorption part 21) containing the acidic gas adsorbent for 4 hours.

The adsorption test A3 can be performed by the same method as the above-described adsorption test A1, except that the test time is changed from 15 hours to 4 hours. The adsorption amount a3 of carbon dioxide when the adsorption test A3 is performed is preferably 0.3 mmol/g or more, and may be 0.5 mmol/g or more, 0.8 mmol/g or more, 1.0 mmol/g or more, 1.3 mmol/g or more, 1.5 mmol/g or more, 1.7 mmol/g or more, or even 1.8 mmol/g or more. The upper limit value of the adsorption amount a3 of carbon dioxide is not limited in particular, and is 5 mmol/g, for example.

### (Heat resistance test)

The acidic gas adsorbent of the present embodiment preferably has high heat resistance. The heat resistance of the acidic gas adsorbent can be evaluated, for example, by performing a heat resistance test with respect to the acidic gas adsorbent. The heat resistance test can be performed, for example, by performing heat treatment in an environment of 85°C and 10%RH for 100 hours with respect to the acidic gas adsorbent. As an example, when the heat treatment is performed in an environment of 85°C and 10%RH for 100 hours with respect to the acidic gas adsorbent, a maintenance rate R1 of the amount (mmol/g) of carbon dioxide that can be adsorbed is, for example, 30% or more, and may be 40% or more, 50% or more, 60% or more, 70% or more, 80% or more, 85% or more, 90% or more, 92% or more, 94% or more, 95% or more, or even 96% or more. For the acidic gas adsorbent, it can be said that the higher the maintenance rate R1 is, the higher the heat resistance is. It can be said that the acidic gas adsorbent having higher heat resistance has higher durability in long-term use. The upper limit value of the maintenance rate R1 is not limited in particular, and is 99%, for example.

The maintenance rate R1 can be identified in detail by the following method. First, the acidic gas adsorbent is placed in a glass container (e.g., Laboran screw tube bottle, manufactured by AS ONE Corporation) in a dry room having a dew point of about - 60°C. Next, the glass container is set in a constant temperature and humidity machine (e.g., PSL-2J, manufactured by ESPEC CORP.), and heat treatment is performed at 85°C and 10%RH for 100 hours in air. Next, the acidic gas adsorbent after heat treatment is set in a vacuum dryer (e.g., VOS-310C, manufactured by EYELA) in a dry room and treated in a vacuum atmosphere under a condition of 60°C for 2 hours or more. With respect to the acidic gas adsorbent after treatment, an adsorption amount a4 of carbon dioxide when the above adsorption test A1 is performed is measured. On the basis of the obtained adsorption amount a4 and the adsorption amount a1 of carbon dioxide when the adsorption test A1 is performed with respect to the acidic gas adsorbent before the heat resistance test, the maintenance rate R1 can be calculated by the following formula. Maintenance rate R1 (%) = adsorption amount a4 (mmol/g) + adsorption amount a1 (mmol/g) × 100

The adsorption amount a4 of carbon dioxide is, for example, 0.35 mmol/g or more, and may be 0.4 mmol/g or more, 0.5 mmol/g or more, 0.8 mmol/g or more, 1.0 mmol/g or more, 1.3 mmol/g or more, 1.5 mmol/g or more, 1.8 mmol/g or more, or even 2.0 mmol/g or more. The upper limit value of the adsorption amount a4 of carbon dioxide is not limited in particular, and is 10 mmol/g, for example.

### (Moisture heat resistance test)

The acidic gas adsorbent of the present embodiment preferably has high moisture heat resistance. The moisture heat resistance of the acidic gas adsorbent can be evaluated, for example, by performing a moisture heat resistance test with respect to the acidic gas adsorbent. The moisture heat resistance test can be performed, for example, by performing heat treatment in an environment of 85°C and 85%RH for 100 hours with respect to the acidic gas adsorbent. As an example, when the heat treatment is performed in an environment of 85°C and 85%RH for 100 hours with respect to the acidic gas adsorbent, a maintenance rate R2 of the amount (mmol/g) of carbon dioxide that can be adsorbed is, for example, 30% or more, and may be 40% or more, 50% or more, 60% or more, 70% or more, 80% or more, 85% or more, 90% or more, 95% or more, or even 96% or more. For the acidic gas adsorbent, it can be said that the higher the maintenance rate R2 is, the higher the moisture heat resistance is. It can be said that the acidic gas adsorbent having higher moisture heat resistance has higher durability in long-term use. The upper limit value of the maintenance rate R2 is not limited in particular, and is 99%, for example.

The maintenance rate R2 can be identified in detail by the following method. First, the acidic gas adsorbent is placed in a glass container (e.g., Laboran screw tube bottle, manufactured by AS ONE Corporation) in a dry room having a dew point of about - 60°C. Next, the glass container is set in a constant temperature and humidity machine (e.g., PSL-2J, manufactured by ESPEC CORP.), and heat treatment is performed at 85°C and 85%RH for 100 hours in air. Next, the acidic gas adsorbent after heat treatment is set in a vacuum dryer (e.g., VOS-310C, manufactured by EYELA) in a dry room and treated in a vacuum atmosphere under a condition of 60°C for 2 hours or more. With respect to the acidic gas adsorbent after treatment, an adsorption amount a5 of carbon dioxide when the above adsorption test A1 is performed is measured. On the basis of the obtained adsorption amount a5 and the adsorption amount a1 of carbon dioxide when the adsorption test A1 is performed with respect to the acidic gas adsorbent before the moisture heat resistance test, the maintenance rate R2 can be calculated by the following formula. Maintenance rate R2 (%) = adsorption amount a5 (mmol/g) + adsorption amount a1 (mmol/g) × 100

The adsorption amount a5 of carbon dioxide is, for example, 0.35 mmol/g or more, and may be 0.4 mmol/g or more, 0.5 mmol/g or more, 0.8 mmol/g or more, 1.0 mmol/g or more, 1.3 mmol/g or more, 1.5 mmol/g or more, 1.8 mmol/g or more, 2.0 mmol/g or more, or even 2.1 mmol/g or more. The upper limit value of the adsorption amount a5 of carbon dioxide is not limited in particular, and is 10 mmol/g, for example.

### (Polymer)

In the acidic gas adsorbent, the polymer P has a function of adsorbing acidic gas due to the amino group. The polymer P includes, as the amino group, at least one selected from the group consisting of a primary amino group, a secondary amino group, and a tertiary amino group, for example. From the viewpoint of the acidic gas adsorption ability, the polymer P preferably includes at least one selected from the group consisting of a primary amino group and a secondary amino group, and particularly preferably includes a secondary amino group. In other words, the amino group of the polymer P preferably includes a secondary amino group. The polymer P having a secondary amino group also has a tendency of easily desorbing the adsorbed acidic gas. That is, in the case of the polymer P having a secondary amino group, a regeneration process of the acidic gas adsorbent can be performed under a relatively mild condition. The polymer P may include a tertiary amino group, but does not have to include any tertiary amino group.

The weight ratio of nitrogen element in the polymer P is, for example, 5 wt% or more and preferably 10 wt% or more. The higher this weight ratio is, the more the acidic gas adsorption ability of the acidic gas adsorbent tends to be improved. The upper limit value of the weight ratio of nitrogen element in the polymer P is not limited in particular, and is 30 wt%, for example. When all nitrogen element included in the polymer P is derived from the amino group, the above weight ratio of nitrogen element can be regarded as the weight ratio of the amino group in the polymer P.

The density of nitrogen element in the polymer P is, for example, higher than 12.0 mmol/g and preferably 12.2 mmol/g or more, and may be 12.5 mmol/g or more, 13.0 mmol/g or more, 13.5 mmol/g or more, 14.0 mmol/g or more, 14.5 mmol/g or more, 15.0 mmol/g or more, or even 15.5 mmol/g or more. The upper limit value of the density of nitrogen element is not limited in particular, is, for example, 30 mmol/g, and may be 20 mmol/g. In the present description, the density of nitrogen element in the polymer P means the amount of substance of nitrogen element included in 1 g of the polymer P, and can be measured, for example, by the same method as the density d of nitrogen element in the above-described acidic gas adsorbent. When all nitrogen element included in the polymer P is derived from the amino group, the density of nitrogen element can be regarded as the density of the amino group in the polymer P.

The polymer P may include another functional group other than the amino group. Examples of the other functional group include a hydroxyl group, an ether group, an ester group, an amide group, and the like. The polymer P preferably includes an ether group as the other functional group.

The polymer P is, for example, an amine polymer including a constitutional unit U1 derived from an epoxy monomer. The amine polymer includes, for example, at least one selected from the group consisting of a polymer P1 of a monomer group including an amine monomer and an epoxy monomer and a reaction product P2 of a compound group including an amine prepolymer and an epoxy monomer, and is preferably the reaction product P2. The reaction product P2 not only tends to have a high density of nitrogen element, but also tends to have high heat resistance and moisture heat resistance. A specific example of the reaction product P2 is a product (crosslinked product) in which an amine prepolymer is crosslinked by an epoxy monomer.

The monomer group for forming the polymer P1 includes an amine monomer and an epoxy monomer as described above, and is preferably composed of only these monomers. That is, the polymer P1 is preferably a polymer of an amine monomer and an epoxy monomer.

The amine monomer is a monomer including at least one amino group, and, for example, includes at least one primary amino group. The number of the primary amino groups included in the amine monomer is preferably two or more, and may be three or more, or may be four or more. The upper limit value of the number of the primary amino groups is not limited in particular, and is ten, for example. The amine monomer may include a secondary amino group and a tertiary amino group, in addition to the primary amino group, but does not have to include any tertiary amino group. The ratio of the number of primary amino groups relative to the number of all amino groups in the amine monomer is not limited in particular, is, for example, 10% or more, preferably 20% or more, and more preferably 30% or more, and may be 40% or more. The upper limit value of this ratio is not limited in particular, is, for example, 80%, and may be 60%.

The molecular weight of the amine monomer is, for example, 50 or more, preferably 100 or more, and more preferably 150 or more. The higher the molecular weight of the amine monomer is, the easier it is to adjust the density of nitrogen element in the polymer P1 to be large. The upper limit value of the molecular weight of the amine monomer is not limited in particular, is, for example, less than 1000 and preferably 500 or less, and may be 300 or less. The amine equivalent of the amine monomer is, for example, 10 g/eq. or more, preferably 20 g/eq. or more, and more preferably 30 g/eq. or more. The larger the amine equivalent of the amine monomer is, the easier it is to adjust the density of nitrogen element in the polymer P1 to be large. The upper limit value of the amine equivalent of the amine monomer is not limited in particular, is, for example, 150 g/eq. or less and preferably 100 g/eq. or less, and may be 50 g/eq. or less. In the present description, the amine equivalent means the mass of the amine monomer relative to one equivalent of active hydrogen of the primary amino group included in the amine monomer.

Examples of the amine monomer include: aliphatic amines such as ethylamine, ethylenediamine, 1,4-butylenediamine, 1,5-pentanediamine, 1,6-hexanediamine, 1,7-heptanediamine, 1,8-octanediamine, diethylenetriamine, triethylenetetramine, tetraethylenepentamine, pentaethylenehexamine, hexaethyleneheptamine, imino-bis-propylamine, bis(hexamethylene)triamine, 1,3,6-trisaminomethylhexane, tris(2-aminoethyl)amine, N,N'-bis(3-aminopropyl)ethylenediamine, polymethylenediamine, trimethylhexamethylenediamine, and polyetherdiamine; alicyclic amines such as isophoronediamine, menthanediamine, piperazine, N-aminoethylpiperazine, 3,9-bis(3-aminopropyl)-2,4,8,10-tetraoxaspiro(5,5)undecane adduct, bis(4-amino-3-methylcyclohexyl)methane, and bis(4-aminocyclohexyl)methane, and modified products of these; and the like. The amine monomer preferably includes an aliphatic amine, in particular, triethylenetetramine (TETA). The amine monomer can be used alone, or two types or more thereof may be used in combination.

The epoxy monomer is a monomer including at least one epoxy group. The number of the epoxy groups included in the epoxy monomer is preferably two or more, and may be three or more, or may be four or more. The larger the number of the epoxy groups is, the more crosslinking points in the epoxy monomer there are and the denser the crosslinked structure in the polymer P1 is, and therefore there is a tendency that heat resistance and moisture heat resistance are improved. The upper limit value of the number of the epoxy groups included in the epoxy monomer is not limited in particular, and is ten, for example.

The molecular weight of the epoxy monomer is not limited in particular, and is, for example, less than 1000 and preferably 500 or less. The epoxy equivalent of the epoxy monomer is not limited in particular, and is, for example, 150 g/eq. or less and preferably 100 g/eq. or less. The smaller the epoxy equivalent of the epoxy monomer is, the more the density of nitrogen element in the polymer P1 tends to increase. The lower limit value of the epoxy equivalent of the epoxy monomer is not limited in particular, and is 50 g/eq., for example. The epoxy equivalent means the mass of the epoxy monomer including one equivalent of the epoxy group.

Examples of the epoxy monomer include: monofunctional epoxy compounds such as n-butyl glycidyl ether, higher alcohol glycidyl ether, allyl glycidyl ether, 2-ethylhexyl glycidyl ether, phenyl glycidyl ether, cresyl glycidyl ether, p-sec-butylphenyl glycidyl ether, and t-butylphenyl glycidyl ether; diepoxy alkanes such as 1,5-hexadiene diepoxide, 1,7-octadiene diepoxide, and 1,9-decadiene diepoxide; polyfunctional epoxy compounds having an ether group such as (poly)ethylene glycol diglycidyl ether, (poly)propylene glycol diglycidyl ether, 1,4-butanediol diglycidyl ether, neopentyl glycol diglycidyl ether, 1,6-hexanediol diglycidyl ether, trimethylolpropane polyglycidyl ether, and pentaerythritol polyglycidyl ether; and polyfunctional epoxy compounds having an amino group such as N,N,N',N'-tetraglycidyl-m-xylenediamine and 1,3-bis(N,N-diglycidylaminomethyl)cyclohexane.

The epoxy monomer may be an aromatic epoxy resin, a non-aromatic epoxy resin, or the like, depending on the case. Examples of the aromatic epoxy resin include a polyphenyl-based epoxy resin, an epoxy resin including a fluorene ring, an epoxy resin including triglycidyl isocyanurate, an epoxy resin including a hetero aromatic ring (e.g., triazine ring), and the like. Examples of the polyphenyl-based epoxy resin include bisphenol A type epoxy resin, brominated bisphenol A type epoxy resin, bisphenol F type epoxy resin, bisphenol AD type epoxy resin, stilbene type epoxy resin, biphenyl type epoxy resin, bisphenol A novolak type epoxy resin, cresol novolak type epoxy resin, diaminodiphenylmethane type epoxy resin, tetrakis(hydroxyphenyl)ethane-based epoxy resin, and the like. Examples of the non-aromatic epoxy resin include aliphatic glycidyl ether type epoxy resin, aliphatic glycidyl ester type epoxy resin, alicyclic glycidyl ether type epoxy resin, alicyclic glycidyl amine type epoxy resin, alicyclic glycidyl ester type epoxy resin, and the like.

The epoxy monomer can be used alone, or two types or more thereof may be used in combination. When a monofunctional epoxy compound is used, the monofunctional epoxy compound is preferably used in combination with another epoxy monomer including two or more epoxy groups. The monofunctional epoxy compound can also be utilized as a reactive diluent for adjusting the viscosity of the monomer group for forming the polymer P1.

The epoxy monomer preferably includes a polyfunctional epoxy compound having an ether group such as ethylene glycol diglycidyl ether (EDE) and pentaerythritol tetraglycidyl ether (PETG). EDE and PETG have a small epoxy equivalent and can easily decrease a glass transition temperature Tg of the polymer P. These epoxy compounds also tend to have low cost. The epoxy monomer may include a polyfunctional epoxy compound having an amino group such as N,N,N',N'-tetraglycidyl-m-xylenediamine and 1,3-bis(N,N-diglycidylaminomethyl)cyclohexane, together with or instead of a polyfunctional epoxy compound having an ether group.

The amine prepolymer for forming the reaction product P2 includes, for example, at least one amino group, in particular, at least one primary amino group. The number of primary amino groups included in the amine prepolymer is preferably two or more, and may be three or more, or may be four or more. The upper limit value of the number of primary amino groups is not limited in particular, and is 100, for example. In addition to the primary amino group, the amine prepolymer may also include a secondary amino group or a tertiary amino group. The ratio of the number of primary amino groups relative to the number of all amino groups in the amine prepolymer is not limited in particular, is, for example, 10% or more, preferably 20% or more, and more preferably 30% or more, and may be 40% or more. The higher this ratio is, the more crosslinking points in the amine prepolymer there are and the denser the crosslinked structure in the reaction product P2 is, and therefore there is a tendency that heat resistance and moisture heat resistance are improved. The upper limit value of this ratio is not limited in particular, is, for example, 80%, and may be 60%.

The weight average molecular weight of the amine prepolymer is not limited in particular, is, for example, 200 or more, and may be 300 or more, 500 or more, 1000 or more, or even 1500 or more. An amine prepolymer having a high weight average molecular weight tends to be safe to handle. Furthermore, when an amine prepolymer having a high weight average molecular weight is used, the density of nitrogen element in the reaction product P2 tends to increase. The upper limit value of the weight average molecular weight of the amine prepolymer is not limited in particular, and is 5000, for example. The amine equivalent of the amine prepolymer is, for example, 10 g/eq. or more, preferably 20 g/eq. or more, and more preferably 30 g/eq. or more. The upper limit value of the amine equivalent of the amine prepolymer is not limited in particular, is, for example, 200 g/eq. or less, and may be 150 g/eq. or less, or may be 100 g/eq. or less. The number of constitutional units included in the amine prepolymer (polymerization degree thereof) is not limited in particular, and is 5 to 100, for example.

Examples of the amine prepolymer include: aliphatic polyamines such as polyethyleneimine and polyalkylene polyamine; (meth)acrylic polymers having an amino group such as aminoethylated acrylic polymer; aliphatic polyamideamines formed through reaction between polyamines and a dimer acid; and the like. The amine prepolymer preferably includes an aliphatic polyamine, in particular, polyethyleneimine (PEI). The amine prepolymer can be used alone, or two types or more thereof may be used in combination.

The amine prepolymer, in particular, PEI, tends to be safer to handle than the amine monomer. As an example, the amine prepolymer does not have to correspond to a hazardous material under the Fire Service Act, and does not have to correspond to an object substance under the Poisonous and Deleterious Substances Control Act. The amine prepolymer may have a negative mutagenicity test (Ames test) result. The amine prepolymer may be a mild or moderate irritant in a skin irritation test (primary skin irritation test using rabbits).

Examples of the epoxy monomer for forming the reaction product P2 include those described above with respect to the polymer P1.

As described above, the polymer P as an amine polymer includes the constitutional unit U1 derived from an epoxy monomer. When the polymer P is the polymer P1, the polymer P further includes a constitutional unit U2 derived from an amine monomer. The content of the constitutional unit U1 in the polymer P, in particular, the polymer P1, is 20 wt% to 70 wt%, for example. The content of the constitutional unit U2 in the polymer P, in particular, the polymer P1, is, for example, 30 wt% or more and preferably 50 wt% or more. The upper limit value of the content of the constitutional unit U2 is not limited in particular, and is 80 wt%, for example.

The glass transition temperature Tg of the polymer P is not limited in particular, is, for example, 40°C or less, preferably 30°C or less, more preferably 20°C or less, and further preferably 15°C or less, and may be 10°C or less, may be 5°C or less, or may be 0°C or less. When the glass transition temperature Tg of the polymer P is low to this extent, the speed at which acidic gas is adsorbed by the acidic gas adsorbent tends to be high. From the viewpoint of sufficiently ensuring the acidic gas adsorption ability of the acidic gas adsorbent and from the viewpoint of heat resistance, the lower limit value of the glass transition temperature Tg of the polymer P is, for example, -100°C, preferably - 50°C, and more preferably -10°C. In the present description, the glass transition temperature Tg means the midpoint glass transition temperature (T_{mg}) obtained according to the standards of JIS K7121:1987. Normally, the polymer P corresponds to a thermosetting resin. The polymer P is solid, for example, at 25°C, preferably in the range of 25°C to 80°C.

The weight average molecular weight of the polymer P is not limited in particular, and is, for example, 500 or more, preferably 1000 or more, more preferably 10000 or more, and further preferably 100000 or more. The upper limit value of the weight average molecular weight of the polymer P is, for example, 10000000.

The acidic gas adsorbent includes, for example, the polymer P as a main component. In the present description, the "main component" means a component most included on a weight basis in the acidic gas adsorbent. The content of the polymer P in the acidic gas adsorbent is, for example, 50 wt% or more, preferably 70 wt% or more, and more preferably 90 wt% or more, and may be 95 wt% or more, or may be 99 wt% or more. The acidic gas adsorbent may be substantially composed of only the polymer P. The higher the content of the polymer P is, the more the acidic gas adsorption ability of the acidic gas adsorbent tends to be improved.

The acidic gas adsorbent may be substantially composed of only the polymer P, and may further include another component other than the polymer P. Examples of the other component include a reaction accelerator, a plasticizer, a pigment, a dye, an anti-aging agent, a conductive material, an antistatic agent, an ultraviolet absorber, a flame retardant, an antioxidant, and the like. The reaction accelerator is utilized, for example, when the polymer P is synthesized. Examples of the reaction accelerator include: tertiary amines such as triethylamine and tributylamine; and imidazoles such as 2-phenol-4-methylimidazole, 2-ethyl-4-methylimidazole, and 2-phenol-4,5-dihydroxyimidazole. These reaction accelerators can accelerate reaction for synthesizing the polymer P1, for example.

The weight ratio of nitrogen element in the acidic gas adsorbent is, for example, 5 wt% or more and preferably 10 wt% or more. The higher this weight ratio is, the more the acidic gas adsorption ability of the acidic gas adsorbent tends to be improved. The upper limit value of the weight ratio of nitrogen element in the acidic gas adsorbent is not limited in particular, and is 30 wt%, for example. When all nitrogen element included in the acidic gas adsorbent is derived from the amino group, the above weight ratio of nitrogen element can be regarded as the weight ratio of the amino group in the acidic gas adsorbent.

The shape of the acidic gas adsorbent is not limited in particular, and is, for example, a block shape, a sheet shape, a particulate shape, or the like. In the present description, the particulate shape includes a spherical shape, an ellipsoid shape, a flake shape, a fiber shape, and the like.

The acidic gas adsorbent may have a porous structure. As an example, the acidic gas adsorbent may include a porous body S including the polymer P. The porous body S is typically composed of only the polymer P. The shape of the porous body S is, for example, a block shape, a sheet shape, a particulate shape, or the like. The acidic gas adsorbent may include a porous resin sheet as the porous body S, but does not have to include a porous resin sheet. The acidic gas adsorbent does not have to include a member other than the porous body S, for example, a carrier for supporting the polymer P, and the like. When the acidic gas adsorbent does not include a carrier and the like, the shape of the acidic gas adsorbent tends to be able to be easily adjusted by cutting or machining.

The porous body S has, for example, a three-dimensional network skeleton composed of the polymer P. In the porous body S, for example, the above three-dimensional network skeleton extends continuously. The pores included in the porous body S are, for example, continuous holes continuously formed in a three-dimensional manner. The porous body S may have independent holes, or may have through holes penetrating the porous body S.

The specific surface area of the acidic gas adsorbent (porous body S) is not limited in particular, is, for example, 0.5 m²/g or more, and may be 1.0 m²/g or more, 2.0 m²/g or more, 3.0 m²/g or more, 4.0 m²/g or more, 5.0 m²/g or more, 6.0 m²/g or more, 7.0 m²/g or more, 8.0 m²/g or more, or even 9.0 m²/g or more. The larger the specific surface area of the acidic gas adsorbent is, the more the speed at which acidic gas is adsorbed by the acidic gas adsorbent tends to increase. The upper limit value of the specific surface area of the acidic gas adsorbent is not limited in particular, and is 100 m²/g, for example. The specific surface area of the acidic gas adsorbent means the BET (Brunauer-Emmett-Teller) specific surface area in terms of nitrogen gas adsorption. The specific surface area of the acidic gas adsorbent can be measured by a method conforming to JIS Z8830: 2013.

The present invention provides, in another aspect thereof, an acidic gas adsorbent including a polymer P having an amino group, wherein
a density d of nitrogen element in the acidic gas adsorbent is higher than 12.0 mmol/g,
the acidic gas adsorbent has a specific surface area of 0.5 m²/g or more, and
the polymer P has a glass transition temperature of 40°C or less.

The acidic gas adsorbent has, for example, the above-described adsorption and desorption properties for carbon dioxide. As an example, the adsorption amounts a1 to a3, the desorption amounts b1 and b2, the 50°C desorption rate, the 65°C desorption rate, and the like measured by the above-described methods with respect to the acidic gas adsorbent may satisfy the ranges exemplified above.

The pore volume of the acidic gas adsorbent (porous body S) is not limited in particular, is, for example, 0.1 cm³/g or more, and may be 0.2 cm³/g or more, 0.3 cm³/g or more, 0.5 cm³/g or more, 1.0 cm³/g or more, or even 2.0 cm³/g or more. The upper limit value of the pore volume of the acidic gas adsorbent is not limited in particular, is, for example, 5.0 cm³/g, and may be 4.0 cm³/g, or may be 3.0 cm³/g. The pore volume of the acidic gas adsorbent can be measured by a mercury intrusion method. The mercury intrusion method is performed under a condition of an initial pressure of 21 kPa using a commercially available pore distribution analyzer (e.g., AutoPore V9620, manufactured by Micromeritics Instrument Corporation).

The average pore diameter of the acidic gas adsorbent (porous body S) is not limited in particular, is, for example, 0.1 µm or more, and may be 0.2 µm or more, 0.3 µm or more, or even 0.5 µm or more. The upper limit value of the average pore diameter of the acidic gas adsorbent is not limited in particular, and is 50 µm, for example. In the present description, the average pore diameter of the acidic gas adsorbent means a median diameter measured by a mercury intrusion method. The mercury intrusion method is performed under a condition of an initial pressure of 21 kPa using a commercially available pore distribution analyzer (e.g., AutoPore V9620, manufactured by Micromeritics Instrument Corporation).

When the acidic gas adsorbent has a particulate shape, the average particle diameter of the acidic gas adsorbent is not limited in particular, is, for example, 0.5 µm or more and preferably 1 µm or more, and may be 10 µm or more, may be 20 µm or more, or may be 30 µm or more. The average particle diameter of the acidic gas adsorbent may be 200 µm or less, may be 100 µm or less, or may be less than 75 µm. In the present description, the average particle diameter of the acidic gas adsorbent means a particle diameter (d50) corresponding to 50% of volume accumulation in a particle size distribution measured by a laser diffraction-type particle size meter or the like.

### (Method for producing acidic gas adsorbent)

A method for producing the acidic gas adsorbent of the present embodiment includes, for example, causing a compound group including an amine monomer or an amine prepolymer and an epoxy monomer to react to form a polymer P. The compound group is, for example, a monomer group including an amine monomer and an epoxy monomer. However, the compound group may include an amine prepolymer instead of or together with the amine monomer.

The compound group may include only an epoxy monomer E1 including two epoxy groups, or may include an epoxy monomer E2 including three or more, for example, four epoxy groups, instead of or together with the epoxy monomer E1. When the compound group includes the epoxy monomers E1 and E2, the weight ratio E1/E2 of the epoxy monomer E2 relative to the epoxy monomer E1 is not limited in particular, and is 4/6 to 8/2, for example.

When the polymer P is to be prepared, the blending ratio between the epoxy monomer and the amine monomer or the amine prepolymer is preferably set such that the ratio E/A of an equivalent (E) of the epoxy group included in the epoxy monomer relative to an equivalent (A) of active hydrogen of the primary amino group included in the amine monomer or the amine prepolymer is, for example, 1 or less, preferably 0.9 or less, and more preferably 0.5 or less. The smaller the ratio E/A is, the more the density d of nitrogen element in the acidic gas adsorbent tends to increase. The lower limit value of the ratio E/A is not limited in particular, and is 0.1, for example.

The reaction of the compound group is, for example, a polymerization reaction of the amine monomer and the epoxy monomer. However, the reaction of the compound group may be a crosslinking reaction of the amine prepolymer by the epoxy monomer. In the reaction of the compound group, the amino group of the amine monomer or the amine prepolymer reacts with the epoxy group of the epoxy monomer. The reaction of the compound group can be carried out by applying energy to the compound group. The energy that is applied to the compound group is preferably thermal energy. As an example, the reaction of the compound group can be caused to proceed by heating the compound group at a temperature of 40°C to 100°C. However, the energy that is applied to the compound group may be light energy.

The acidic gas adsorbent having the porous structure can be produced, for example, by the following method. First, the above compound group is mixed with a porogen to prepare a mixed solution. The porogen is, for example, a solvent that can dissolve the monomers and the prepolymer included in the compound group and further can cause reaction-induced phase separation after the compound group reacts. Specific examples of the porogen include: cellosolves such as methyl cellosolve and ethyl cellosolve; esters such as ethylene glycol monomethyl ether acetate and propylene glycol monomethyl ether acetate; glycols such as polyethylene glycol, polypropylene glycol, and polyoxyalkylene glycols; and ethers such as polyoxyethylene monomethyl ether and polyoxyethylene dimethyl ether. Specific examples of polyoxyalkylene glycols include poly(1,2-butanediol)-6 propylene glycol, polyoxypropylene glyceryl ether, and the like. The porogen may be a polar solvent such as ethyl acetate, N,N-dimethylformamide (DMF), acetonitrile, ethanol, and isopropanol, a non-polar solvent such as toluene, or a mixed solvent of these solvents. The porogen can be used alone, or two types or more thereof may be used in combination.

Another component other than the compound group may be further added to the mixed solution. Examples of the other component include the reaction accelerators described above, and the like.

Next, the compound group is caused to react in the mixed solution. As an example, the compound group is caused to react by filling a mold with the mixed solution and performing heat treatment. Accordingly, a cured body including the polymer P and the porogen is obtained. In the cured body, a co-continuous structure is formed by phase separation of the polymer P and the porogen.

Next, the porogen is extracted and removed from the cured body. Accordingly, an acidic gas adsorbent having a porous structure can be obtained. Extraction of the porogen can be performed, for example, by immersing the cured body in a solvent. As this solvent, water, aliphatic hydrocarbon solvents, aromatic hydrocarbon solvents, aliphatic alcohol solvents, ester solvents, ether solvents, halogen-containing organic solvents, and the like can be used. Examples of aliphatic hydrocarbon solvents include n-hexane, cyclohexane, methylcyclohexane, n-heptane, n-octane, isooctane, petroleum ether, benzine, and the like. Examples of aromatic hydrocarbon solvents include toluene, xylene, mesitylene, benzene, and the like. Examples of aliphatic alcohol solvents include methanol, ethanol, isopropanol, butanol, cyclohexanol, ethylene glycol, propylene glycol, propylene glycol monomethyl ether, diethylene glycol, and the like. Examples of ester solvents include ethyl acetate, and the like. Examples of ether solvents include diethyl ether, diisopropyl ether, dibutyl ether, ethylene glycol dimethyl ether, ethylene glycol diethyl ether, propylene glycol dimethyl ether, propylene glycol diethyl ether, diethylene glycol dimethyl ether, tetrahydrofuran, dioxane, anisole, and the like. Examples of halogen-containing organic solvents include dichloromethane, chloroform, carbon tetrachloride, dichloroethane, chlorobenzene, and the like. These solvents can be used individually, or two types or more thereof may be used in combination.

The higher the reaction rate of the compound group is when the cured body is produced, the more finely the porogen tends to be dispersed in the cured body. By removing the porogen from the cured body in which the porogen is finely dispersed, an acidic gas adsorbent having a large specific surface area can be produced. The reaction rate of the compound group varies in accordance with the types and the blending ratio of the monomer and the prepolymer included in the compound group, etc., for example. As an example, the reaction rate of the compound group tends to be high, for example, when the epoxy monomer E2 including three or more, for example, four epoxy groups is used, or when a polyethyleneimine having a high weight average molecular weight is used as the amine prepolymer.

### (Usage of acidic gas adsorbent)

The acidic gas adsorbent of the present embodiment can adsorb acidic gas. Examples of the acidic gas include carbon dioxide, hydrogen sulfide, carbonyl sulfide, sulfur oxide (SOx), hydrogen cyanide, and nitrogen oxide (NOx), and preferably, the acidic gas is carbon dioxide.

The acidic gas adsorbent can be used according to the following method, for example. First, mixed gas including acidic gas is brought into contact with the acidic gas adsorbent. The mixed gas includes another gas other than acidic gas, for example. Examples of the other gas include nonpolar gas such as hydrogen or nitrogen, and inert gas such as helium, and preferably, the other gas is nitrogen. Typically, the mixed gas is atmospheric air. The mixed gas may be off-gas from a chemical plant or thermal power generation.

The temperature of the mixed gas is room temperature (23°C), for example. The concentration of acidic gas in the mixed gas is not limited in particular, and in a standard state (0°C, 101 kPa), is, for example, 0.01 vol% (100 vol ppm) or more and preferably 0.04 vol% (400 vol ppm) or more, and may be 1.0 vol% or more. The upper limit value of the concentration of carbon dioxide in the mixed gas is not limited in particular, and in a standard state, is 10 vol%, for example. Typically, the pressure of the mixed gas is equal to that of atmospheric air in the use environment of the acidic gas adsorbent. However, the mixed gas that is brought into contact with the acidic gas adsorbent may be pressurized.

The acidic gas adsorbent having come into contact with the mixed gas adsorbs acidic gas included in the mixed gas. Operation of bringing the mixed gas into contact with the acidic gas adsorbent is performed until acidic gas adsorption by the acidic gas adsorbent reaches equilibrium, for example.

Next, a regeneration process is performed with respect to the acidic gas adsorbent having adsorbed acidic gas. The regeneration process can be performed by heating the acidic gas adsorbent, for example. The heating temperature of the acidic gas adsorbent is 50 to 80°C, for example. The acidic gas adsorbent may be heated in a reduced-pressure atmosphere or a vacuum atmosphere. Through the heating of the acidic gas adsorbent, acidic gas is desorbed from the acidic gas adsorbent. Accordingly, the acidic gas adsorbent is regenerated and the acidic gas adsorbent can be repeatedly used. The acidic gas, in particular, carbon dioxide, desorbed from the acidic gas adsorbent can be utilized as synthesis raw material for chemicals or dry ice. The adsorption operation of acidic gas by means of the acidic gas adsorbent and the regeneration process of the acidic gas adsorbent can be performed by using the measurement device 10 (acidic gas adsorption device) described above.

### [Example]

In the following, the present invention will be described in further detail using Examples and Comparative Examples. However, the present invention is not limited thereto.

### (Example 1)

First, 1.73 g of poly(1,2-butanediol)-6 propylene glycol (UNIOL (registered trademark) PB-500, manufactured by NOF CORPORATION) and 0.43 g of polyoxypropylene glyceryl ether (UNILUB (registered trademark) DGP-700, manufactured by NOF CORPORATION) were added to a 6-mL screw tube bottle (manufactured by AS ONE Corporation). In the obtained mixed solution, 0.74 g of ethylene glycol diglycidyl ether (EX-810, manufactured by Nagase ChemteX Corporation) and 0.74 g of pentaerythritol tetraglycidyl ether (SHOFREE (registered trademark) PETG, manufactured by Showa Denko K.K.) were dissolved, to prepare a mixed solution of an epoxy monomer and a porogen.

Next, 1.56 g of polyethyleneimine (EPOMIN SP-003, manufactured by NIPPON SHOKUBAI CO., LTD.) was added to this mixed solution to prepare a mixed solution of the epoxy monomer, an amine prepolymer, and the porogen. In this mixed solution, the ratio E/A of an equivalent (E) of the epoxy group included in the epoxy monomer relative to an equivalent (A) of active hydrogen of the primary amino group included in the amine prepolymer was 0.5.

Next, a tabletop shaker (Angel Vibrator Digital 60 Hz) was set to intensity 5, and the mixed solution was shaken for 2 minutes. Then, the mixed solution was cured by allowing the mixed solution to stand in a thermostatic bath at 80°C for 2 hours. Accordingly, a block-shaped cured body including a polymer P having an amino group was obtained. The cured body was taken out from the screw tube bottle and cut into about 3 mm squares. Next, an operation of immersing the cured body in ethyl acetate at 60°C for 1 hour was repeated twice with liquid replacement. Accordingly, the porogen was removed from the cured body to form a porous body including the polymer P. The porous body was dried at 60°C for 1 hour and further vacuum-dried for 2 hours to obtain an acidic gas adsorbent of Example 1.

### (Examples 2 to 11)

Acidic gas adsorbents of Examples 2 to 11 were obtained by the same method as in Example 1, except that the types and the blending amounts of the raw materials were changed as shown in Table 1.

### (Comparative Example 1)

First, 2.63 g of polypropylene glycol (ADEKA POLYETHER P-400, manufactured by ADEKA Corporation) and 0.36 g of polyethylene glycol (manufactured by Sigma-Aldrich Co. LLC., average molecular weight: 200) were added to a 6-mL screw tube bottle (manufactured by AS ONE Corporation). In the obtained mixed solution, 1.58 g of a bisphenol A type epoxy resin (JER828, manufactured by Mitsubishi Chemical Corporation) was dissolved, to prepare a mixed solution of an epoxy prepolymer and a porogen.

Next, 0.60 g of triethylenetetramine was added to this mixed solution to prepare a mixed solution of the epoxy prepolymer, an amine monomer, and the porogen. In this mixed solution, the ratio E/A of an equivalent (E) of the epoxy group included in the epoxy prepolymer relative to an equivalent (A) of active hydrogen of the primary amino group included in the amine monomer was 0.5.

Next, a tabletop shaker (Angel Vibrator Digital 60 Hz) was set to intensity 5, and the mixed solution was shaken for 4 minutes. Then, the mixed solution was cured by allowing the mixed solution to stand in a thermostatic bath at 80°C for 2 hours. Accordingly, a block-shaped cured body including a polymer P having an amino group was obtained. The cured body was taken out from the screw tube bottle and cut into about 3 mm squares. Next, an operation of immersing the cured body in isopropyl alcohol at 60°C for 1 hour was repeated twice with liquid replacement. Furthermore, an operation of immersing the cured body in ultrapure water at 60°C for 1 hour was repeated twice with liquid replacement. Next, the cured body was immersed in methanol at room temperature for 1 hour. The cured body was air-dried at room temperature for 12 hours and further vacuum-dried at 60°C for 8 hours to obtain an acidic gas adsorbent of Comparative Example 1.

### (Comparative Examples 2 and 3)

Acidic gas adsorbents of Comparative Examples 2 and 3 were obtained by the same method as in Comparative Example 1, except that the types and the blending amounts of the raw materials were changed as shown in Table 1.

### [Density of nitrogen element]

With respect to the produced acidic gas adsorbents, the density d of nitrogen element was measured by the above-described method. As a CHN elemental analyzer, Vario EL III manufactured by Elementar was used.

### [Specific surface area]

With respect to the produced acidic gas adsorbents, the specific surface area was measured by a method conforming to the standards of JIS Z8830: 2013. For the measurement, a specific surface area measurement device (trade name "BERSORP-mini", manufactured by MicrotracBEL Corporation) was used.

### [Glass transition temperature Tg]

With respect to the polymers included in the produced acidic gas adsorbents, the glass transition temperature Tg was measured by the following method. First, about 5 mg of each acidic gas adsorbent was set in a differential scanning calorimeter (DSC2500, manufactured by TA Instruments). Using this device, the temperature was increased from 30°C to 200°C at a temperature increase rate of 10°C/min in a nitrogen atmosphere and maintained at that temperature for 1 minute. Next, the acidic gas adsorbent was cooled to -50°C at a temperature decrease rate of 10°C/min and maintained at that temperature for 1 minute, and then the temperature was increased to 200°C at a temperature increase rate of 10°C/min. In a DSC curve at the second temperature increase, a first baseline before specific heat change appeared, a second baseline after specific heat change appeared, and a tangent line passing through a point at which the slope became maximum among bent portions due to the specific heat change, were identified. The intermediate temperature between the intersection of the first baseline and the tangent line and the intersection of the second baseline and the tangent line was identified as the glass transition temperature Tg.

### [Adsorption amount of carbon dioxide]

With respect to the produced acidic gas adsorbents, the adsorption amounts a1 to a3 and the desorption amounts b1 and b2 were measured by the above-described methods. Furthermore, on the basis of these results, the rate (50°C desorption rate) of the desorption amount b1 (mmol/g) relative to the adsorption amount a1 (mmol/g) and the rate (65°C desorption rate) of the desorption amount b2 relative to the adsorption amount a1 (mmol/g) were calculated.

### [Heat resistance test]

With respect to the produced acidic gas adsorbents, a heat resistance test was performed by the above-described method, to measure the adsorption amount a4 of carbon dioxide. Furthermore, the rate (maintenance rate R1) of the adsorption amount a4 (mmol/g) relative to the adsorption amount a1 (mmol/g) was calculated.

### [Moisture heat resistance test]

With respect to the produced acidic gas adsorbents, a moisture heat resistance test was performed by the above-described method, to measure the adsorption amount a5 of carbon dioxide. Furthermore, the rate (maintenance rate R2) of the adsorption amount a5 (mmol/g) relative to the adsorption amount a1 (mmol/g) was calculated.

**[Table 1]**

| | Epoxy compound E1 | | Epoxy compound E2 | | Weight ratio E1/E2 (*1) | Amine compound | |
|---|---|---|---|---|---|---|---|
| | Type | Blending amount [g] | Type | Blending amount [g] | | Type | Blending amount [g] |
| Example 1 | EDE | 0.74 | PETG | 0.74 | 5/5 | PEI300 | 1.56 |
| Example 2 | EDE | 0.56 | PETG | 0.84 | 4/6 | PEI300 | 1.51 |
| Example 3 | EDE | 1.04 | T-C | 0.45 | 7/3 | PEI300 | 1.44 |
| Example 4 | EDE | 0.89 | T-C | 0.59 | 6/4 | PEI300 | 1.44 |
| Example 5 | EDE | 1.28 | - | - | - | PEI1200 | 1.70 |
| Example 6 | EDE | 1.28 | - | - | - | PEI1800 | 1.70 |
| Example 7 | EDE | 0.73 | T-X | 0.73 | 5/5 | PEI300 | 1.47 |
| Example 8 | EDE | 0.64 | PETG | 0.96 | 4/6 | TETA | 1.31 |
| Example 9 | EDE | 0.94 | PETG | 0.63 | 6/4 | TETA | 1.30 |
| Example 10 | EDE | 1.18 | PETG | 0.30 | 8/2 | TETA | 1.23 |
| Example 11 | EDE | 1.08 | T-C | 0.46 | 7/3 | TETA | 1.24 |
| Com parative Example 1 | JER828 | 1.58 | - | - | - | TETA | 0.60 |
| Com parative Example 2 | JER828 | 1.80 | - | - | - | TETA | 0.43 |
| Com parative Example 3 | JER828 | 1.86 | - | - | - | TETA | 0.35 |

| | | | | | | | |
|---|---|---|---|---|---|---|---|
| (*1) The weight ratio E1/E2 of the epoxy compound E1 relative to the epoxy compound E2 | | | | | | | |

**[Table 1] (cont.)**

| | Equivalent ratio E/A (*2) | Porogen p1 | | Porogen p2 | |
|---|---|---|---|---|---|
| | | Type | Blending amount [g] | Type | Blending amount [g] |
| Example 1 | 0.5 | PB-500 | 1.73 | DGP-700 | 0.43 |
| Example 2 | 0.5 | PB-500 | 1.82 | DGP-700 | 0.46 |
| Example 3 | 0.5 | PB-500 | 1.74 | DGP-700 | 0.43 |
| Example 4 | 0.5 | PB-500 | 1.74 | DGP-700 | 0.44 |
| Example 5 | 0.5 | PB-500 | 1.50 | PB-700 | 0.64 |
| Example 6 | 0.5 | PB-500 | 1.06 | PB-700 | 1.06 |
| Example 7 | 0.5 | PB-500 | 1.53 | DGP-700 | 0.66 |
| Example 8 | 0.5 | PB-500 | 1.16 | DGP-700 | 1.16 |
| Example 9 | 0.5 | PB-500 | 1.16 | DGP-700 | 1.16 |
| Example 10 | 0.5 | PB-500 | 0.99 | DGP-700 | 1.48 |
| Example 11 | 0.5 | PB-500 | 1.17 | DGP-700 | 1.17 |
| Comparative Example 1 | 0.5 | P-400 | 2.63 | PEG | 0.36 |
| Comparative Example 2 | 0.8 | P-400 | 2.65 | PEG | 0.36 |
| Comparative Example 3 | 1.0 | P-400 | 2.62 | PEG | 0.36 |

| | | | | | |
|---|---|---|---|---|---|
| (*2) The ratio E/A of the equivalent (E) of the epoxy group in the epoxy compound relative to the equivalent (A) of active hydrogen of the primary amino group in the amine compound | | | | | |

In Table 1, the epoxy monomer and the epoxy prepolymer are simply expressed as epoxy compounds. The amine monomer and the amine prepolymer are simply expressed as amine compounds.

The abbreviations in Table 1 are as follows.
EDE: ethylene glycol diglycidyl ether (EX-810, manufactured by Nagase ChemteX Corporation)
JER828: bisphenol A type epoxy resin (JER828, manufactured by Mitsubishi Chemical Corporation)
PETG: pentaerythritol tetraglycidyl ether (SHOFREE (registered trademark) PETG, manufactured by Showa Denko K.K.)
T-C: 1,3-bis(N,N-diglycidylaminomethyl)cyclohexane (TETRAD-C, manufactured by Mitsubishi Chemical Corporation)
T-X: N,N,N',N'-tetraglycidyl-m-xylenediamine (TETRAD-X, manufactured by Mitsubishi Chemical Corporation)
PEI300: polyethyleneimine (EPOMIN SP-003, manufactured by NIPPON SHOKUBAI CO., LTD., weight average molecular weight: about 300)
PEI1200: polyethyleneimine (EPOMIN SP-012, manufactured by NIPPON SHOKUBAI CO., LTD., weight average molecular weight: about 1200)
PEI1800: polyethyleneimine (EPOMIN SP-018, manufactured by NIPPON SHOKUBAI CO., LTD., weight average molecular weight: about 1800)
TETA: triethylenetetramine (manufactured by Tosoh Corporation)
PB-500: poly(1,2-butanediol)-6 propylene glycol (UNIOL (registered trademark) PB-500, manufactured by NOF CORPORATION)
P-400: polypropylene glycol (ADEKA POLYETHER P-400, manufactured by ADEKA Corporation)
DGP-700: polyoxypropylene glyceryl ether (UNILUB (registered trademark) DGP-700, manufactured by NOF CORPORATION)
PB-700: copolymer of butylene glycol and propylene glycol (UNIOL (registered trademark) PB-700, manufactured by NOF CORPORATION)
PEG: polyethylene glycol (manufactured by Sigma-Aldrich Co. LLC., average molecular weight: 200)

The safety index in terms of handling the amine compounds used in the Examples and the Comparative Examples is shown in Table 2 below.

**[Table 2]**

| | Fire Service Act | Poisonous and Deleterious Substances Control Act | Mutagenicity test (Ames test) | Skin irritation test (rabbit) |
|---|---|---|---|---|
| PEI300 | Hazardous material category IV class III petroleums | Not applicable | Positive | Moderate irritant |
| PEI1200 | Designated combustible | Not applicable | Negative | Mild irritant |
| PEI1800 | Designated combustible | Not applicable | Negative | Mild irritant |
| TETA | Hazardous material category IV class III petroleums | Deleterious substance | Positive | Strong irritant |

**[Table 3]**

| | Density d of nitrogen element | Specific surface area | Glass transition temperature Tg | CO₂ adsorption amount | | | CO₂ desorption amount | |
|---|---|---|---|---|---|---|---|---|
| | | | | a2 23°C 1 hr | a3 23°C 4 hr | a1 23°C 15 hr | b1 50°C 1.5 hr | b2 65°C 1.5 hr |
| | [mmol/g] | [m²/g] | [°C] | [mmol/g] | [mmol/g] | [mmol/g] | [mmol/g] | [mmol/g] |
| Example 1 | 16.4 | 7.6 | 15 | 0.70 | 1.79 | 2.30 | 1.75 | 2.23 |
| Example 2 | 166 | 5.1 | 20 | 0.53 | 1.13 | 2.06 | 1.19 | 1.98 |
| Example 3 | 17.1 | 2.7 | 10 | 0.77 | 1.52 | 2.13 | 1.56 | 207 |
| Example 4 | 17.4 | 5.3 | 17 | 0.74 | 1.84 | 2.20 | 1.69 | 2.13 |
| Example 5 | 179 | 6.4 | -1 | 0.69 | 1.88 | 2.34 | 1.92 | 2.27 |
| Example 6 | 178 | 9.3 | 3 | 0.68 | 1.82 | 2.27 | 1.86 | 220 |
| Example 7 | 178 | 5.9 | 20 | 0.65 | 1.63 | 2.16 | 1.73 | 2.12 |
| Example 8 | 14.5 | 7.5 | 21 | 0.97 | 1.78 | 1.92 | 1.60 | 1.87 |
| Example 9 | 13.4 | 1.7 | 14 | 0.34 | 0.99 | 1.76 | 1.32 | 1.73 |
| Example 10 | 13.3 | 0.6 | 6 | 0.25 | 0.72 | 1.55 | 0.71 | 1.44 |
| Example 11 | 14.5 | 1.7 | 11 | 0.13 | 0.46 | 1.14 | 0.50 | 1.13 |
| Comparative Example 1 | 6.6 | 0.3 | 62 | - | - | 0.03 | 0.01 | - |
| Comparative Example 2 | 5.1 | 5.5 | 95 | - | - | 0.14 | 0.12 | - |
| Comparative Example 3 | 4.4 | 116 | 112 | - | - | 0.06 | 0.04 | - |

**[Table 3] (cont.)**

| | CO₂ desorption rate | | Heat resistance test 85°C, 10%RH, 100 hr | | Moisture heat resistance test 85°C, 85%RH, 100 hr | |
|---|---|---|---|---|---|---|
| | 50°C desorption rate | 65°C desorption rate | Adsorption amount a4 23°C, 15 hr | Maintenance rate R1 | Adsorption amount a5 23°C, 15 hr | Maintenance rate R2 |
| | [%] | [%] | [mmol/g] | [%] | [mmol/g] | [%] |
| Example 1 | 76 | 97 | 208 | 91 | 219 | 95 |
| Example 2 | 58 | 96 | - | - | - | - |
| Example 3 | 73 | 97 | 166 | 78 | - | - |
| Example 4 | 77 | 97 | 209 | 95 | - | - |
| Example 5 | 82 | 97 | 1.67 | 71 | 205 | 88 |
| Example 6 | 82 | 97 | 167 | 74 | 206 | 91 |
| Example 7 | 80 | 98 | 207 | 96 | 2.13 | 99 |
| Example 8 | 83 | 97 | 1.86 | 97 | 0.68 | 35 |
| Example 9 | 75 | 98 | - | - | - | - |
| Example 10 | 46 | 93 | 1.41 | 91 | - | - |
| Example 11 | 44 | 99 | - | - | 0.62 | 55 |
| Comparative Example 1 | 41 | - | - | - | - | - |
| Comparative Example 2 | 86 | - | - | - | - | - |
| Comparative Example 3 | 80 | - | - | - | - | - |

As can be seen from Table 3, in the acidic gas adsorbents of the Examples, the density d of nitrogen element was high, and the adsorption amount a1 and the desorption amount b1 were also large values. It can be said that the acidic gas adsorbents of the Examples are suitable for adsorption and desorption of acidic gas under a relatively mild condition.

### INDUSTRIAL APPLICABILITY

The acidic gas adsorbent of the present embodiment can adsorb carbon dioxide in atmospheric air, for example.

## Claims

1. An acidic gas adsorbent comprising a polymer having an amino group, wherein
a density of nitrogen element in the acidic gas adsorbent is higher than 12.0 mmol/g,
when the following adsorption test A1 is performed, an adsorption amount a1 of carbon dioxide is 0.35 mmol/g or more, and
when the following desorption test B1 is performed, a desorption amount b1 of carbon dioxide is 0.2 mmol/g or more,
adsorption test A1: mixed gas composed of carbon dioxide, nitrogen, and water vapor is continuously fed into a container containing the acidic gas adsorbent for 15 hours, wherein a concentration of the carbon dioxide in the mixed gas is 400 vol ppm, and the mixed gas has a temperature of 23°C and a humidity of 50%RH, and
desorption test B1: the acidic gas adsorbent after the adsorption test A1 is performed is heated at 50°C for 1.5 hours while the mixed gas is continuously fed into the container.

2. The acidic gas adsorbent according to claim 1, wherein a rate of the desorption amount b1 (mmol/g) relative to the adsorption amount a1 (mmol/g) is 50% or more.

3. The acidic gas adsorbent according to claim 1, wherein
when the following desorption test B2 is performed, a desorption amount b2 of carbon dioxide is 0.25 mmol/g or more,
desorption test B2: the acidic gas adsorbent after the adsorption test A1 is performed is heated at 65°C for 1.5 hours while the mixed gas is continuously fed into the container.

4. The acidic gas adsorbent according to claim 3, wherein a rate of the desorption amount b2 (mmol/g) relative to the adsorption amount a1 (mmol/g) is 70% or more.

5. The acidic gas adsorbent according to claim 1, wherein
when the following adsorption test A2 is performed, an adsorption amount a2 of carbon dioxide is 0.05 mmol/g or more,
adsorption test A2: the mixed gas is continuously fed into the container for 1 hour.

6. The acidic gas adsorbent according to claim 1, wherein
when the following adsorption test A3 is performed, an adsorption amount a3 of carbon dioxide is 0.1 mmol/g or more,
adsorption test A3: the mixed gas is continuously fed into the container for 4 hours.

7. The acidic gas adsorbent according to claim 1, wherein the polymer has a glass transition temperature of 40°C or less.

8. The acidic gas adsorbent according to claim 1, having a specific surface area of 0.5 m²/g or more.

9. An acidic gas adsorbent comprising a polymer having an amino group, wherein
a density of nitrogen element in the acidic gas adsorbent is higher than 12.0 mmol/g,
the acidic gas adsorbent has a specific surface area of 0.5 m²/g or more, and
the polymer has a glass transition temperature of 40°C or less.

10. The acidic gas adsorbent according to claim 1 or 9, wherein, when heat treatment is performed in an environment of 85°C and 10%RH for 100 hours, a maintenance rate R1 of an amount (mmol/g) of carbon dioxide that can be adsorbed is 50% or more.

11. The acidic gas adsorbent according to claim 1 or 9, wherein, when heat treatment is performed in an environment of 85°C and 85%RH for 100 hours, a maintenance rate R2 of an amount (mmol/g) of carbon dioxide that can be adsorbed is 50% or more.

12. The acidic gas adsorbent according to claim 1 or 9, wherein the polymer is included as a main component.

13. The acidic gas adsorbent according to claim 1 or 9, wherein the polymer is an amine polymer including a constitutional unit derived from an epoxy monomer.

14. The acidic gas adsorbent according to claim 13, wherein the amine polymer includes at least one selected from the group consisting of a polymer P1 of a monomer group including an amine monomer and an epoxy monomer and a reaction product P2 of a compound group including an amine prepolymer and an epoxy monomer.

15. The acidic gas adsorbent according to claim 14, wherein the amine prepolymer has a weight average molecular weight of 300 or more.

16. The acidic gas adsorbent according to claim 14, wherein the amine prepolymer includes polyethyleneimine.

17. The acidic gas adsorbent according to claim 14, wherein the amine monomer includes an aliphatic amine.

18. The acidic gas adsorbent according to claim 13, wherein the epoxy monomer has an epoxy equivalent of 150 g/eq. or less.

19. The acidic gas adsorbent according to claim 13, wherein the epoxy monomer includes a polyfunctional epoxy compound having an ether group.

20. The acidic gas adsorbent according to claim 1 or 9, having a porous structure.

21. An acidic gas adsorption device comprising
an adsorption part having a gas inlet and a gas outlet, wherein
the adsorption part contains the acidic gas adsorbent according to claim 1 or 9.
